# EUROPEAN PATENT APPLICATION

(11) **EP 2 106 097 A1**
(43) Date of publication of application: **30.09.2009**
(21) Application number: 08300158.6
(22) Date of filing: 27.03.2008
(51) Int. Cl.: H04L 29/08, H04M 3/51, H04L 29/06, H04L 29/12

(54) **Method and device for providing peer-to-peer emergency service**

(71) Applicant: Alcatel Lucent, 75008 Paris (FR)
(72) Inventor: De Vriendt, Johan André, 9051 Afsnee (BE); Van Cleynenbreugel, Joeri, 2440 Geel (BE)
(74) Representative: Schneider, Sandra

(57) **Abstract**

The present invention relates to a method for providing peer-to-peer emergency service in a peer-to-peer network. The method comprises receiving a peer-to-peer emergency request (2), Said request (2) comprises an identifier relating to the origin (110) of the request (2). The identifier is used to identify the network access provider at the origin (110) of the request (2). The location of the origin (110) of the request (2) is retrieved from said network access provider (150). The invention also relates to a emergency service peer (100) for providing peer-to-peer emergency service.

## Description

### BACKGROUND OF THE INVENTION

The invention relates to a method for providing peer-to-peer emergency service in a peer-to-peer network. The invention also relates to a node in a peer-to-peer network for providing peer-to-peer emergency service.

Peer-to-peer models for service delivery in telecommunication networks are becoming more and more popular. Signalling protocols are increasingly combined with peer-to-peer technology. For example, in the P2PSIP working group internet draft with title "Concepts and Terminology for peer-to-peer SIP" basic peer-to-peer SIP concepts and terminology are presented. Peer-to-peer solutions for public voice service offerings are investigated. Other examples for signaling protocols to be used with peer-to-peer technology are XMPP (Extensible Messaging and Presence Protocol) or JINGLE. The JINGLE specification extends the XMPP instant messaging protocol to support voice & video, JINGLE thus provides an alternative to bundling SIP into applications for rich media services.

In DE 102005045859 A1 a method for providing an emergency service in a peer-to-peer communication network is presented. The network element where the communication connection is initialised checks if an emergency number has been dialled and determines the target operator for the emergency service relying on information which is stored within said network element.

In WO 2006/078202 A1 a method is presented for obtaining location information for a subscriber connected to an IP access network. If an IMS network connected to said IP access network receives a request-from a subscriber which has a current IP address the IMS network requests a location from the IP access network corresponding to said current IP address. The location is then submitted to the IMS network.

### OBJECT OF THE INVENTION

An object of the invention is to provide a method for providing peer-to-peer emergency service in a peer-to-peer network, A further object of the invention is to provide a corresponding node in a peer-to-peer network.

### SUMMARY OF THE INVENTION

This object and other objects are solved by the features of the independent claims. Features of preferred embodiments of the invention are subject matter of the dependent claims.

The method for providing peer-to-peer emergency service in a peer-to-peer network comprises receiving a peer-to-peer emergency request, e. g. a SIP peer-to-peer emergency request. The peer-to-peer emergency request can be in any signalling protocol, the SIP protocol being an example of such a signalling protocol. Other examples for signalling protocols to be used with peer-to-peer technology are XMPP, JINGLE. The request comprises an identifier relating to the origin of the request, The origin of the request is for example the user of the peer-to-peer network who is the originator of the emergency request. Said identifier is used to indirectly identify the network access provider ot the origin of the request. The location of the origin of the request is then retrieved from that network access provider.

The invention provides a solution for providing emergency services support for peer-to-peer signalling protocol solutions, e. g. peer-to-peer SIP solutions. It makes use of a web services based interface between network operator and peer-to-peer service provider.

In advantageous embodiment of the invention a signalling protocol message, e. g. SIP message, is then sent to the public safety answering point PSAP appropriate to the retrieved location of the origin of the request for emergency service. The public safety answering point usually corresponds to the public safety answering point which is closest to the retrieved location.

The identifier used to indirectly identify the network access provider at the origin of the request is according to an advantageous embodiment of the invention the IP address of the origin of the request for emergency service. The IP address of the origin of the request is available without any prior configuration by the user who is at the origin of the emergency request.

According to another advantageous embodiment of the invention said identifier for identifying the network access provider at the origin of the request is a pseudonym being known to the network access provider and being received together with the request for emergency service.

According to another advantageous embodiment of the invention said identifier to indirectly identify the network access provider can be a pseudonym of the origin of the request for emergency service. Said pseudonym is a pseudonym upon which the peer-to-peer network and said network access provider have agreed. This is for example a case of identity federation in-between the peer-to-peer network and the network access provider.

The identifier used to indirectly identify the network access provider is used to identify the network access provider the origin of the request for emergency service is currently attached to. This can for example be a mobile or fixed network the peer-to-peer user is currently attached to. The identification can for example be done via a look-up using a whois domain name lookup. A whois domain name lookup to a regional internet registry (RIR) will result in information amongst other regarding the network access provider at the origin of the request for emergency service.

Once the network access provider is known, the location can be retrieved from the network access provider either using the IP address or another identifier, e. g. Uniform Resource Identifier URI or pseudonym. If another identifier is used the peer-to-peer provider can for example do the mapping based on a table that maps peer-to-peer user ID and network access provider fowards a user ID or pseudonym known by the network access provider. The accurate location of the origin of the request for emergency service, e. g. the user, can then be obtained and the correct PSAP can be triggered and the accurate location of the origin of the request can be provided to the PSAP.

An emergency service peer is a peer-to-peer service node that provides peer-to-peer emergency service. The node comprises an input adapted to receive a signalling protocol peer-to-peer emergency request, e. g. Session Initiation Protocol SIP peer-to-peer emergency request. The request comprises an identifier relating to the origin of the request. The node further comprises means adapted to identify the network access provider of the origin of the request using said identifier. The node further comprises means adapted to retrieve the location of the origin of the request from said network access provider.

The inventive emergency service peer node provides the location of the origin of a poer-to-peer emergency request together with the request.

According to a preferred embodiment of the invention the emergency service peer node comprises means adapted to send a signalling protocol message, e. g. SIP message, to the public safety answering point PSAP appropriate to the location of the origin of the emergency service. The emergency service peer node can trigger the correct PSAP and provide the accurate location of the origin of the request, e. g. the user from who the emergency call originates.

The identifier relating to the origin of the request is for example the IP address of a user of the peer-to-peer network, a URI or pseudonym known to the network access provider and provided by the origin, e. g. the user, to the peer-to-peer provider or a pseudonym that network access provider and peer-to-peer provider have agreed upon, e. g. in case of identify federation, According to a preferred embodiment of the invention the identifier is used to identify the network access provider the peer-to-peer user is currently attached to. This can be done via a look-up using for example a whois domain name lookup. A whois domain name lookup to a regional registry will result in information amongst other regarding the network access provider. Once the network access provider is known the location of the origin of the request can be retrieved from the network access provider either using the IP address or an other identifier, e. g. URI or pseudonym. In case of URI or pseudonym the peer-to-peer provider does the mapping e. g. based on a table that maps peer-to-peer user ID and network access provider towards a user ID or pseudonym known by the network access provider. The response to this request is the accurate location of the origin, e. g. the user, and then the emergency service peer node can trigger the correct PSAP and provide an accurate location with the trigger.

### BRIEF DESCRIPTION OF THE DRAWINGS

Other characteristics and advantages of the invention will become apparent in the following detailed description of preferred embodiments of the invention illustrated by the accompanying drawings given by way of non-limiting illustrations. The same reference numerals may be used in different figures of the drawings to identify the same or similar elements.
Figure 1 shows a schematic overview of the message flow of the inventive method,
Figure 2 shows a schematic overview of a peer-to-peer network comprising an emergency service peer node.

### DETAILED DESCRIPTION OF THE INVENTION

In the following, a preferred embodiment of the invention using the SIP protocol will be given. The preferred embodiment using SIP is only an example, the principles of the invention can be realized using any signalling protocol like XMPP, JINGLE. or any other standard or proprietary protocol that offers the capability to set up a session.

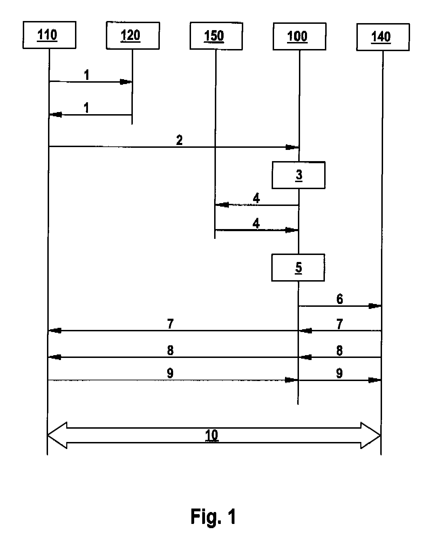

Shown in figure 1 is the origin 110 of an emergency request. The origin 110 of the emergency request is for example the user of a peer-to-peer network. In step 1 of the method the request is sent to a look-up and register function LRF 120. The request sent from the origin 110 to the LRF 120 is for example the get (911) command. The LRF 120 answers in step 1 in the backwards direction with the address of record (AOR) of the emergency service peer 100.

In the second step of the method the origin of the request 110 sends the request for emergency service in form of a signalling protocol message, e. g. a SIP invite message to the emergency service peer 100.

In the third step of the method the emergency service peer 100 maps the IP address to a network access provider, for example by using a whois domain name lookup. In more general terms the emergency service peer 100 maps an identifier of the origin 110 of the request too network access provider (NAP) of the origin 110 of the request. Step 3 is preferably subdivided into two substeps. Substep 3.1. makes use of the whois request to do a mapping between IP address and NAP. This substep 3.1. is used to get to know who to send the Get-Location request to. Substep 3.2. is to decide on the identifier to be used to send to the NAP. This can be an IP address; URI or pseudonym known to NAP and provided by end-user in signalling and/or a pseudonym that NAP and peer-to-peer provider have agreed upon.

In step 4 of the method an emergency service peer 100 gets the location of the origin of the request for emergency service. The emergency service peer 100 requests the location from the location server of the network access provider 150. In step 4 the location server of the network access provider 150 provides the location to the emergency service peer 100.

In step 5 of the method the emergency service peer 100 maps the location of the origin 110 of the emergency request to a PSAP 140 local to the location of the origin 110 of the emergency request. In step 6 of the method a SIP request is sent to the PSAP 140. This is the SIP invite request from the emergency service peer 100 to the PSAP 140.

In steps 7 and 8 a connection is opened in-between the PSAP 140 and the origin 110. This is for example done in step 7 by a ringing request to the origin 110 and in step 8 by a following ok request to the origin 110. In response to this the origin 110 sends in step 9 an acknowledge message to the emergency service peer 100 and the emergency service peer 100 to the PSAP 140. As a result a RTP (RTP, real time transport protocol) media connection 10 is established in-between the origin of the emergency request 110 and the public safety answering point PSAP 140.

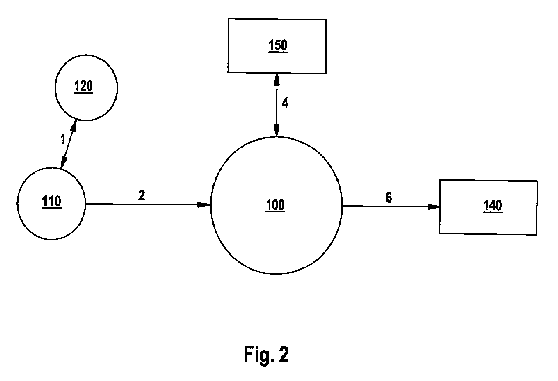

In figure 2 is shown a peer-to-peer network offering an example of the inventive emergency service. Shown in figure 2 is an emergency service peer 100. An emergency request originating from the origin of the emergency request 110 is in step 1 directed to a look-up and register function 120. The request is then directed to the emergency service peer 100 in step 2. In step 3 the emergency service peer 100 - with support of the RlR's whois domain name lookup service - maps an identifier of the origin of the emergency request to the network access provider to which the origin of the emergency request is currently connected. In step 4 the emergency service peer 100 gets the location of the origin 110 from a location server of the network access provider 150. In step 5 the location of the origin 110 is mapped to a PSAP 140. In step 6 the appropriate PSAP 140 local to the origin 110 is contacted.

The solution presented has an advantage to work for P2P access systems of both fixed and mobile access. It also works in case of a roaming user. The peer-to-peer provider just has to know the PSAP addresses of the possible locations of the origin 110 of an emergency request. A further advantage of the invention is that no pre-configuration by the end user is necessary, e. g. in case when the IP address is used as an identifier. Only limited configuration of the end user is needed if some other identifiers like the pseudonym is used.

According to a highly preferred embodiment of the invention the presented solution is implemented based on an open interface between the peer-to-peer provider and the network access provider. This open interface is preferably a web services based interface published via an e. g. WSDL file.

## Claims

1. Method for providing peer-to-peer emergency service in a peer-to-peer network, the method comprising the steps of
receiving a peer-to-peer emergency request (2), said request (2) comprising an identifier relating to the origin (110) of the request (2), using said identifier to identify the network access provider at the origin (110) of the request (2), and retrieving the location of the origin (110) of the request (2) from said network access provider (150).

2. Method according to claim 1 further comprising the step of
sending a signalling message to the public safety answering point (140) appropriate to said retrieved location.

3. Method according to claim 1, **characterized by**
said identifier being the IP address of the origin (110) of said request (2).

4. Method according to claim 1, **characterized by**
said identifier being a pseudonym of the origin (110) of said request, said pseudonym being known to the network access provider (150) and being received together with said request (2).

5. Method according to claim 1, **characterized by**
identity federation in between the peer-to-peer network and the network access provider (150), and said identifier being a pseudonym of the origin (110) of said request (2), upon which the peer-to-peer network and the network access provider (150) have agreed.

6. Method according to claim 1, further **characterized in that**
the identification of the network access provider (150) at the origin (110) of the request using said identifier is done using an internet registry, preferably a regional internet registry.

7. Node (100) for providing peer-to-peer emergency service comprising
an input adapted to receive a peer-to-peer emergency request (2), said request (2) comprising an identifier relating to the origin (110) of the request (2),
means (3) adapted to identify the network access provider (150) at the origin (110) of said request (2) using said identifier, and
means adapted to retrieve the location of the origin (110) of the request (2) from said network access provide (150).

8. Node (100) according to claim 7, **characterized by**
means adapted to send o signalling message (6) to the public safety answering point (140) appropriate to said retrieved location.

9. Node (100) according to claim 7, further **characterized in that**
said means (3) adapted to identify the network access provider (150) at the origin (110) of said request (2) using said identifier are further adapted to use an internet registry, preferably a regional internet registry, for said identification.
